# EUROPEAN PATENT APPLICATION

(11) **EP 3 932 603 A1**
(43) Date of publication of application: **05.01.2022**
(21) Application number: 19917438.4
(22) Date of filing: 25.02.2019
(51) Int. Cl.: B23K 9/04, B23K 26/342, B23K 31/00, C22C 19/03

(54) **WELDING REPAIR METHOD FOR PRECIPITATION-STRENGTHENED CAST PRODUCT**

(71) Applicant: The Chugoku Electric Power Co., Inc., Hiroshima-shi, Hiroshima 730-8701 (JP)
(72) Inventor: NISHIDA, Hidetaka, Hiroshima-shi, Hiroshima 730-8701 (JP)
(74) Representative: Osha Liang
(86) International application number: PCT/JP2019/007013
(87) International publication number: WO 2020/174525

(57) **Abstract**

A precipitation-strengthened cast product welding repair method being a method of repairing a damaged portion of a precipitation-strengthened cast product, the method comprising welding the damaged portion by micro TIG welding using a welding material 53 containing a solid-solution-strengthened alloy and having higher toughness than the precipitation-strengthened cast product.

## Description

### [Technical Field]

The present disclosure relates to a precipitation-strengthened cast product welding repair method.

### [Background Art]

The high-temperature strength of cast products, such as the rotor blades, combustor, and transition piece of a turbine at a thermal power generation facility, a nuclear power generation facility, or the like, can be improved by using a precipitation-strengthened super heat resistant alloy (such as a nickel-based super heat resistant alloy) as their material. However, when these cast products are exposed to high-temperature and high-pressure conditions for a long period of time, their surfaces and the like are sometimes cracked or damaged due to thermal stress generated by repetition of starting and stopping of the turbine and the like. This case is handled by performing repair by TIG welding, laser welding, or the like at the power plant.

In this respect, it is conceivable to enhance the effect of the repair by improving the material of the base material. For example, PTL 1 discloses a Ni₃Al-based intermetallic compound made of Al at greater than 5 at% and 13 at%, V at 9.5 at% or greater and 17.4 at% or less, Nb at 0 at% or greater and 5 at% or less, B at 50 ppm by weight or greater and 1000 ppm by weight or less, and Ni as the balance excluding impurities, and having a dual multi-phase structure with a primary L1₂ phase and an (L1₂ + D0₂₂) eutectoid structure. Also, PTL 2 discloses a Ni-based intermetallic compound alloy containing B at 10 to 1000 ppm by weight relative to the total weight of a composition containing Ni as a main component and 2 to 9 atomic% Al, 10 to 17 atomic% V, 0.5 to 8 atomic% (Ta and/or W), 0 to 6 atomic% Nb, 0 to 6 atomic% Co, and 0 to 6 atomic% Cr which make up 100 at% in total, and having a dual multi-phase structure with a primary precipitate L1₂ phase and an (L1₂ + D0₂₂) eutectoid structure.

On the other hand, PTL 3 discloses a repair method of repairing a rotor blade of a gas turbine with a squealer made of a nickel-based superalloy, including cutting and removing a damaged portion of the squealer, then forming a build-up portion on this portion from the nickel-based superalloy by welding, heating the build-up portion at a temperature within a temperature range of from 1/2 of the melting point (m°C) of the nickel-based superalloy forming the build-up portion to the melting point at a rate of temperature rise of 15°C/min to 500°C/min, blowing a cooling gas to the build-up portion to thereby rapidly cool it, and thereafter performing solution treatment on the build-up portion.

### [Citation List]

### [Patent Literatures]

[PTL 1] International Publication No. 2007/086185
[PTL 2] Japanese Patent Application Publication No. 2009-215649
[PTL 3] Japanese Patent Application Publication No. 2013-68085

### [Summary of Invention]

### [Technical Problems]

As it stands, however, welding operations as represented by PTL 3 are very complicated and still inefficient. For example, heat treatment of a cast product after welding needs to be performed after its components are transported to factories, which requires time and cost since they are large-sized components. Also, this Patent Literature assumes performing laser welding as the welding. With such welding, however, cracking reoccurs in many cases, which leads to a poor yield.

The present disclosure has been made in view of such circumstances, and an object thereof is to provide a precipitation-strengthened cast product welding repair method capable of reliably and efficiently repairing a precipitation-strengthened cast product.

### [Solution to Problems]

An aspect of the present disclosure is a precipitation-strengthened cast product welding repair method being a method of repairing a damaged portion of a precipitation-strengthened cast product, the method comprising welding the damaged portion by micro TIG welding using a welding material containing a solid-solution-strengthened alloy and having higher toughness than the precipitation-strengthened cast product.

The present inventor has found that, when a base material is a precipitation-strengthened cast product, using a welding material containing a solid-solution-strengthened alloy and having higher toughness than the precipitation-strengthened cast product being the base material can relax (externally release) thermal stress applied to the weld portion during and after the repair and therefore significantly enhance the endurance of the base material against the thermal stress and also eliminates the need for the heat treatment that has conventionally been performed. Further, the present inventor has arrived at the idea that performing micro TIG welding as the welding in the above case can maintain the temperature gradient in the vicinity of the weld portion relatively small during the repair and suppress the generation of thermal stress in the weld portion and the decrease in the strength of the base material resulting from it. Thus, with the welding repair method of the present disclosure, a precipitation-strengthened cast product can be repaired reliably and efficiently by appropriately combining a welding material and a welding method.

Note that, in the present disclosure, for example, a welding current for the micro TIG welding is set at 50 A or lower.

As described above, the welding current for the micro TIG welding is set at 50 A or lower. This can reliably prevent damaging of the repaired portion and a region around it during and after the repair (e.g., a reoccurrence of fracture or cracking of the repaired portion).

Note that, in the present disclosure, for example, the welding material is a nickel-based alloy containing a dual multi-phase nanostructure intermetallic compound alloy.

As described above, firstly, the welding material contains a nickel-based alloy. Since nickel has high toughness (ductility), it is possible to reliably achieve the advantageous effect of preventing damaging of the repaired portion and a region around it during and after the repair (e.g., a reoccurrence of fracture or cracking of the repaired portion). Moreover, by having a dual multi-phase nanostructure, it is also possible to achieve an advantageous effect of providing high-temperature tolerance and maintaining good wear resistance and corrosion resistance.

Note that, in the present disclosure, for example, in the micro TIG welding, the welding material is introduced into the damaged portion so as cover an exposed surface of the damaged portion.

As described above, welding is performed so as to cover the exposed surface of the damaged portion of the cast product. This makes it possible to prevent a situation where a local deformation or damage occurs at the boundary between the damaged portion of the base material and the weld portion during and after the repair and the base material needs to be repaired again.

Note that, in the present disclosure, for example, prior to performing the micro TIG welding, a part of the precipitation-strengthened cast product including the damaged portion is cut to thereby form a recess in a surface of the precipitation-strengthened cast product, and the micro TIG welding is performed on the formed recess.

As described above, prior to performing the micro TIG welding, a part including the damaged portion is cut to form a recess (groove). In this way, the micro TIG welding can be performed in the state where the damaged portion is removed. This can prevent damaging of the repaired portion and a region around it during and after the repair (e.g., a reoccurrence of fracture or cracking of the repaired portion) due to the damage that occurred in the base material.

### [Advantageous Effect of Invention]

According to the present disclosure, it is possible to reliably and efficiently repair a precipitation-strengthened cast product.

### [Brief Description of Drawings]

[Fig. 1] Fig. 1 is a diagram illustrating an example of constituent components of a gas turbine provided at a thermal power plant or the like.
[Fig. 2] Fig. 2 is a diagram illustrating an example of the procedure of a cast product welding repair method according to the present embodiment.
[Fig. 3] Fig. 3 is a diagram illustrating an example of a groove formation step.
[Fig. 4] Fig. 4 is a diagram explaining an example of a welding step.
[Fig. 5] Fig. 5 is a diagram illustrating the result of a repair welding test carried out by the present inventors.

### [Description of Embodiments]

Embodiments of the present disclosure will be described with reference to the drawings.

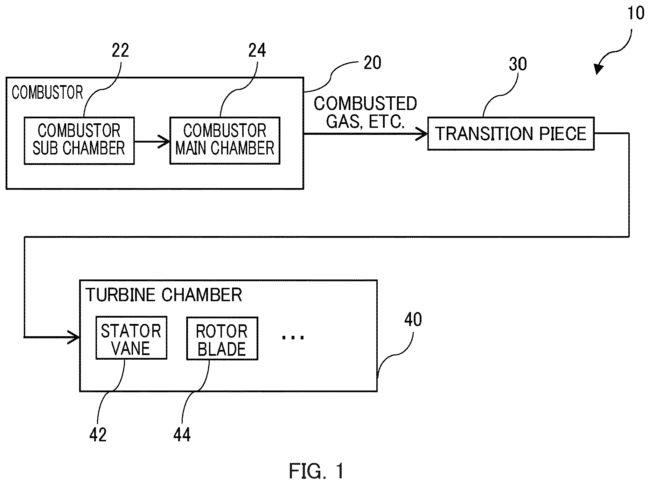

Fig. 1 is a diagram illustrating an example of constituent components of a gas turbine provided at a thermal power plant or the like. A gas turbine 10 is made of a plurality of nickel-cobalt-based heat resistant alloys, for example. Specifically, the gas turbine 10 includes a combustor 20 which includes a combustor sub chamber 22 and a combustor main chamber 24, mixes a fuel with compressed air, and combusts them, a transition piece 30 (transition piece) through which the combusted gas, water vapor, and the like generated in the combustor 20 flow, and a turbine chamber 40 which converts the thermal energy of the combusted gas and the like flowing in from the transition piece 30 into rotational energy. In the turbine chamber 40, a plurality of stator vanes 42 that regulate the flow of the combusted gas and the like and a plurality of rotor blades 44 that compress and convert the combusted gas and the like into rotational energy are arranged alternately. Note that in the present embodiment, each of these constituent components is a precipitation-strengthened cast product obtained by performing precipitation strengthening on a metallic material mainly by aging heat treatment or the like.

In such constituent components of the gas turbine 10, thermal stress is generated due to repetition of starting and stopping of the gas turbine 10, and portions of the constituent components around their surfaces tend to be damaged due to cracking. Thus, a cast product welding repair method according to the present embodiment will be described by taking welding repair of such a crack formed in a surface as an example.

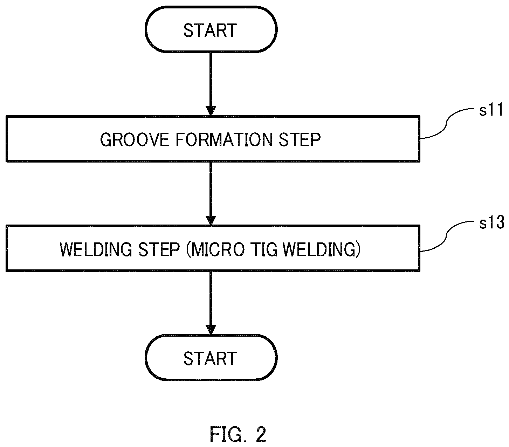

Fig. 2 is a diagram illustrating an example of the procedure of a cast product welding repair method according to the present embodiment.

Firstly, prior to performing micro TIG welding to be described later, a groove formation step of forming a recess (groove) by cutting a part including the formed crack is carried out (s11).

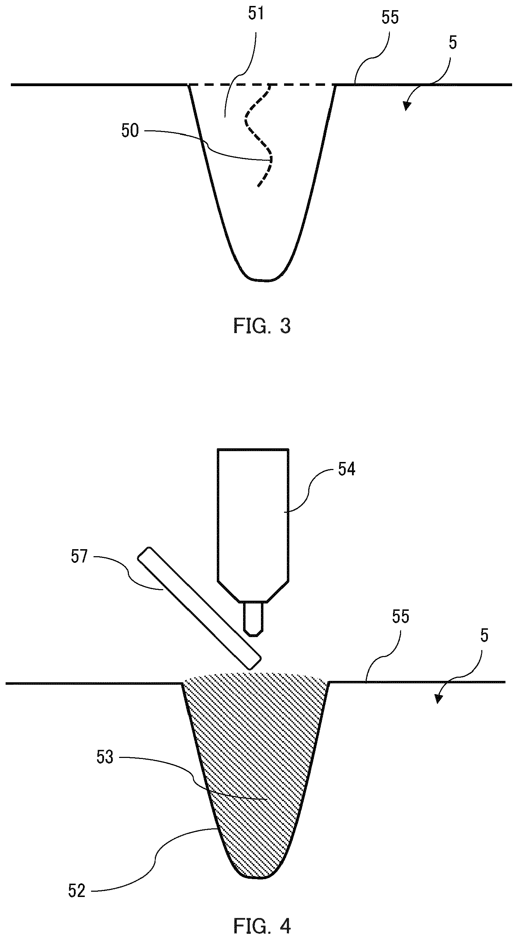

Fig. 3 is a diagram illustrating an example of the groove formation step. As illustrated in Fig. 3, a drill, an end mill, or the like is used on a surface 55 of a constituent component 5 of the gas turbine in which a crack 50 is formed such that a recess 51 (groove) is formed in the surface 55 of the constituent component 5 so as to include the crack 50. As a result, the entire crack 50 is removed. Note that the recess 51 is, for example, a space whose cross-sectional shape is a V- or U-shaped space.

Then, as illustrated in Fig. 2, a welding step of filling the recess 51 formed in the groove formation step is carried out by performing micro TIG (Micro Tungsten Inert Gas) welding on the recess 51 (s13).

Here, Fig. 4 is a diagram explaining an example of the welding step. In the welding step, using a welding electrode 57 containing a welding material 53 and a welding torch 54, welding is performed on an exposed surface 52 at which the inside of the base material (constituent component 5) is exposed as a result of forming the recess 51, so as to firmly cover the entire exposed surface 52 (s11).

The material of the welding electrode 57 (welding material 53) to be used in the welding is an alloy containing a solid-solution-strengthened metal and having higher toughness than the constituent component 5 being the base material. Examples of such an alloy include nickel-based alloys.

Further, this welding material 53 is a nickel-based alloy containing a dual multi-phase nanostructure intermetallic compound alloy. Specifically, it is a nickel-based alloy in which an eutectoid structure with a D0₂₂ phase (Ni₃Al) and an L1₂ phase (Ni₃V) is formed on the nano-level by casting and solidifying nickel with aluminum and vanadium added thereto at predetermined ratios. Note that the ratios of aluminum and vanadium added and the ratio of another element added in a trace amount (such as boron) are not particularly limited.

Specifically, the welding method in the welding step is carried out as follows, for example. Firstly, as for the amount of heat input into the recess 51 (the amount of thermal energy to be supplied by the welding torch 54 per unit time), inputting heat to the recess 51 with a welding current of a level used in common micro TIG welding generates large thermal stress in the recess 51, which leads to a possibility of fracture of the constituent component 5, which is the base material. The welding current therefore needs to be set lower. For example, the welding current is preferably set at 50 A or lower.

Incidentally, as for the movement speed of the welding torch 54 (welding speed), when this movement speed is excessively high, a temperature difference (a temperature difference due to thermal diffusion) tends to appear between the portion where the heat is inputted and a region around it, which can be a cause of fracture of the constituent component 5 being the base material. It is therefore important not to set the movement speed of the welding torch 54 excessively high. This enables necessary heat to be evenly supplied to the recess 51.

By performing the welding by a welding method as above, a weld portion of substantially the same shape as the recess 51 is formed to thereby repair the crack formed in the constituent component 5.

### <Welding Repair Test>

The present inventors conducted a welding repair test on a cast product by using the above welding method. Specifically, in this test, micro TIG welding using a welding electrode with a high concentration of nickel (the welding current was maintained at 50 A or lower) was carried out on the combustor of a gas turbine having a damaged portion (its material was Hastelloy (registered trademark) X) as a test base material to thereby perform welding repair of the damaged portion. After this welding repair, a tensile test and a high-temperature fatigue test were performed to thereby compare the state of an undamaged test base material (hereinafter simply referred to as the base material) and the state of the base material after the welding repair (hereinafter referred to as the repaired member).

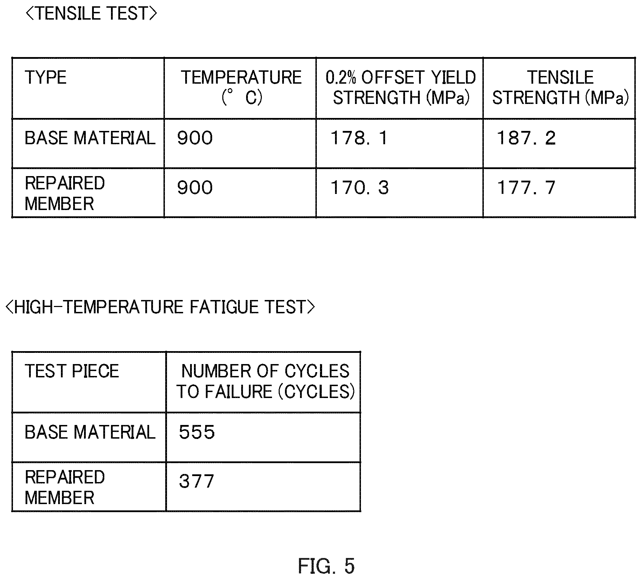

Fig. 5 is a diagram illustrating the result of the welding repair test carried out by the present inventors. In the tensile test (within a 900°C atmosphere), the 0.2% offset yield strength of the base material was 178.1 MPa while the 0.2% offset yield strength of the repaired member was 170.3 MPa. Also, the tensile strength of the base material was 187.2 MPa while the tensile strength of the repaired member was 177.7 MPa. In sum, regarding the tensile strength, the repaired member had substantially equivalent strength to the base material.

Also, in the high-temperature fatigue test (within a 900°C atmosphere with the load controlled at 15 to 150 MPa (in terms of stress)), the number of cycles to failure of the base material was 555 cycles while the number of cycles to failure of the repaired member (relative to the weld portion) was 377 cycles. In sum, regarding the endurance against high-temperature fatigue, it was found that the repaired member had about 70% of the endurance of the base material and were capable of sufficiently withstanding the actual operation of the turbine.

As described above, in the precipitation-strengthened cast product welding repair method in the present embodiment, when a base material is a precipitation-strengthened cast product, using a welding material containing a solid-solution-strengthened alloy and having higher toughness than the precipitation-strengthened cast product being the base material can relax (externally release) thermal stress applied to the weld portion during and after the repair and therefore significantly enhance the endurance of the base material against the thermal stress and also eliminates the need for the heat treatment that has conventionally been performed. Further, the present inventors have arrived at the idea that performing micro TIG welding as the welding in the above case can maintain the temperature gradient in the vicinity of the weld portion relatively small during the repair and suppress the generation of thermal stress in the weld portion and the decrease in the strength of the base material resulting from it. Thus, with the welding repair method in the present embodiment, a cast product can be repaired reliably and efficiently by appropriately combining a welding material and a welding method.

Also, in the cast product welding repair method in the present embodiment, the welding current for the micro TIG welding is set at 50A or lower. This can reliably prevent damaging of the repaired portion and a region around it during and after the repair (e.g., a reoccurrence of fracture or cracking of the repaired portion).

Also, in the cast product welding repair method in the present embodiment, the welding material is a nickel-based alloy containing a dual multi-phase nanostructure intermetallic compound alloy. Since nickel has high toughness (ductility), it is possible to reliably achieve the advantageous effect of preventing damaging of the repaired portion and a region around it during and after the repair (e.g., a reoccurrence of fracture or cracking of the repaired portion). Moreover, by having a dual multi-phase nanostructure, it is also possible to achieve an advantageous effect of providing high-temperature tolerance and maintaining good wear resistance and corrosion resistance.

Also, in the cast product welding repair method in the present embodiment, welding is performed so as to cover the exposed surface of the damaged portion of the cast product. This makes it possible to prevent a situation where a local deformation or damage occurs at the boundary between the damaged portion of the base material and the weld portion during and after the repair and the base material needs to be repaired again.

Also, in the cast product welding method in the present embodiment, prior to performing the micro TIG welding, a part including the damaged portion is cut to form a recess (groove). In this way, the micro TIG welding can be performed in the state where the damaged portion is removed. This can prevent damaging of the repaired portion and a region around it during and after the repair (e.g., a reoccurrence of fracture or cracking of the repaired portion) due to the damage that occurred in the base material.

Embodiments of the present disclosure described above are simply to facilitate understanding of the present disclosure and are not in any way to be construed as limiting the present disclosure. The present disclosure may variously be changed or altered without departing from its essential features and encompass equivalents thereof.

For example, in the present embodiment, in the repair of a crack, a groove is formed prior to performing the micro TIG welding. However, build-up welding may be performed directly on the damaged portion of the cast product without forming the groove. Moreover, for damages other than a crack, e.g., wear (thinning) and the like of a cast product, too, build-up welding may be performed directly on the damaged portion of the cast product. Also, the welding repair method according to the present embodiment is applicable to welding repair of heat-resistant alloy members in general, including constituent components of the gas turbine 10 (combustor 20, transition piece 30, stator vanes 42, rotor blades 44).

### [Reference Signs List]

- 5: Constituent component
- 10: Gas turbine
- 20: Combustor
- 22: Combustor sub chamber
- 24: Combustor main chamber
- 30: Transition piece
- 40: Turbine chamber
- 42: Stator vane
- 44: Rotor blade
- 50: Crack
- 51: Recess
- 52: Exposed surface
- 53: Welding material
- 54: Welding torch
- 55: Surface
- 56: Powder
- 57: Welding electrode

## Claims

1. A precipitation-strengthened cast product welding repair method being a method of repairing a damaged portion of a precipitation-strengthened cast product, the method comprising welding the damaged portion by micro TIG welding using a welding material containing a solid-solution-strengthened alloy and having higher toughness than the precipitation-strengthened cast product.

2. The precipitation-strengthened cast product welding repair method according to claim 1, wherein a welding current for the micro TIG welding is set at 50 A or lower.

3. The precipitation-strengthened cast product welding repair method according to claim 1, wherein the welding material is a nickel-based alloy containing a dual multi-phase nanostructure intermetallic compound alloy.

4. The precipitation-strengthened cast product welding repair method according to claim 1, wherein in the micro TIG welding, the welding material is introduced into the damaged portion so as cover an exposed surface of the damaged portion.

5. The precipitation-strengthened cast product welding repair method according to claim 1, wherein prior to performing the micro TIG welding, a part of the precipitation-strengthened cast product including the damaged portion is cut to thereby form a recess in a surface of the precipitation-strengthened cast product, and the micro TIG welding is performed on the formed recess.
